# EUROPEAN PATENT APPLICATION

(11) **EP 2 334 031 A1**
(43) Date of publication of application: **15.06.2011**
(21) Application number: 10194295.1
(22) Date of filing: 09.12.2010
(51) Int. Cl.: H04L 29/06, H04M 1/253, H04M 7/00

(54) **Establishment of point-to-point communications on IP-based networks**

(30) Priority: 09.12.2009 IT TO20090967
(71) Applicant: ELSAG DATAMAT S.p.A., Genova (IT)
(72) Inventor: Busa', Andrea, 95039, TRECASTAGNI (IT); Migliaccio, Paolo, 00149, ROMA (IT)
(74) Representative: Jorio, Paolo

(57) **Abstract**

The present invention concerns a method for establishing an Internet-Protocol-based point-to-point communication between a first (100) and a second (200) communication device configured to connect to a public switched telephone network (PSTN) (400), to send and receive messages using a messaging service provided by the public switched telephone network (PSTN) (400), and to connect, respectively, to one or more Internet-Protocol-based network(s). The method comprises sending a message from the first communication device (100) to the second communication device (200) using the messaging service provided by the public switched telephone network (PSTN) (400), said message indicating that the first communication device (100) requests to establish an Internet-Protocol-based point-to-point communication with the second communication device (200) and containing Internet-Protocol-based connection parameters related to the first communication device (100). In addition, the method also comprises establishing, by means of the second communication device (200), an Internet-Protocol-based point-to-point communication between said communication devices (100,200) in accordance with the Internet-Protocol-based connection parameters contained in the message sent from first communication device (100) and received by the second communication device (200).

## Description

The present invention relates, in general, to Internet-Protocol-based point-to-point communications between communication devices that have access to one or more Internet-Protocol-based network(s), henceforth referred to as IP-based networks for the sake of description simplicity, and to the so-called Public Switched Telephone Network (PSTN), henceforth referred to as PSTN for the sake of description simplicity.

In particular, the present invention concerns establishment of an Internet-Protocol-based point-to-point communication between communication devices configured to connect to the PSTN and to at least one IP-based network, and using a messaging service supported, or provided, by the PSTN.

The present invention can be advantageously exploited for a plurality of applications such as, for example, Voice over IP (VoIP) applications, security applications for mobile data and/or voice communications, and remote-control and/or remote-monitoring applications, for example in domotics sector.

As is known, middle-range and top-end mobile phone devices, such as the so-called smartphones, are equipped with interfaces for connection to the PSTN, such as interfaces based on GSM (Global System for Mobile communications) technology, henceforth referred to as GSM interfaces for the sake of description simplicity, and/or interfaces based on UMTS (Universal Mobile Telecommunications System) technology, henceforth referred to as UMTS interfaces for the sake of description simplicity, etc. In addition, these devices enable communications based on Internet Protocol, i.e., IP-based communications, using GPRS (General Packet Radio Service) technology, and/or EDGE (Enhanced Data rates for GSM Evolution) technology, and/or UMTS technology, and/or HSDPA/HSUPA (High-Speed Uplink/Downlink Packet Access) technology, etc. Lastly, these devices can also be equipped with WiFi interfaces for wireless access to domestic, company, public, etc. IP-based networks.

Currently, in order that two communication devices can establish an IP-based communication with each other over an IP-based network, it is necessary that conditions 1) and 2), or in alternative, conditions 1) and 3) of those listed below, are satisfied:
1) both communication devices are connected to the IP-based network at the moment when the calling communication device wants to communicate with the called communication device;
2) a centralized server is present on the IP-based network with directory functions that enable the calling communication device to check the accessibility of the called communication device and to obtain the current IP address of the called communication device so as to be able to communicate with the latter;
3) in alternative to condition 2), a distributed directory service that performs the same functions of the centralized server in point 2) is provided through the IP-based network.

Condition 1) is very taxing, especially when the communication devices in question are mobile communication devices, such as a laptop computer with a GSM modem or a smartphone or, more generally, when said communication devices are battery powered. In fact, permanent connection to the IP-based network via, for example, a WiFi card, or a UMTS, EDGE or similar channel, significantly reduces the communication device's battery life.

Conditions 2) and 3) also cause problems. In fact, the impossibility of accessing the directory service, whether centralized or distributed, for whatever reason, prevents the communication devices from communicating via the IP-based network. Furthermore, whoever controls the directory service, whether centralized or distributed, can know if two communication devices have decided to communicate with each other, to the detriment of the privacy of the users of said communication devices. On other hand, whoever controls the directory service can also prevent or delay the connection between the two communication devices, for example, by simply refusing to provide the directory service, prejudicing accessibility to the service itself.

The object of the present invention is therefore that of providing a methodology of establishment of a point-to-point communication over an IP-based network between two communication devices of the aforesaid type which can mitigate the drawbacks just mentioned.

The above-stated object is achieved by the present invention in that it relates to a method for establishing an Internet-Protocol-based point-to-point communication between two communication devices, to a communication device configured to implement said method, and to a software application, or rather a software program, such that, when executed by a communication device, it causes said communication device to become configured to implement said method, as defined in the attached claims.

In particular, the present invention relates to a method for establishing an Internet-Protocol-based point-to-point communication between two communication devices configured to connect to a Public Switched Telephone Network (PSTN), to send and receive messages using a messaging service provided by the Public Switched Telephone Network (PSTN), and to connect, respectively, to one or more Internet-Protocol-based network(s). The method comprises a first step that includes sending a message from the first communication device to the second communication device using the messaging service provided by the Public Switched Telephone Network (PSTN), said message indicating that the first communication device requests to establish an Internet-Protocol-based point-to-point communication with the second communication device and containing Internet-Protocol-based connection parameters related to the first communication device. In addition, the method also comprises a second step that includes establishing, by means of the second communication device, an Internet-Protocol-based point-to-point communication between said communication devices according to the Internet-Protocol-based connection parameters contained in the message sent from the first communication device and received by the second communication device.

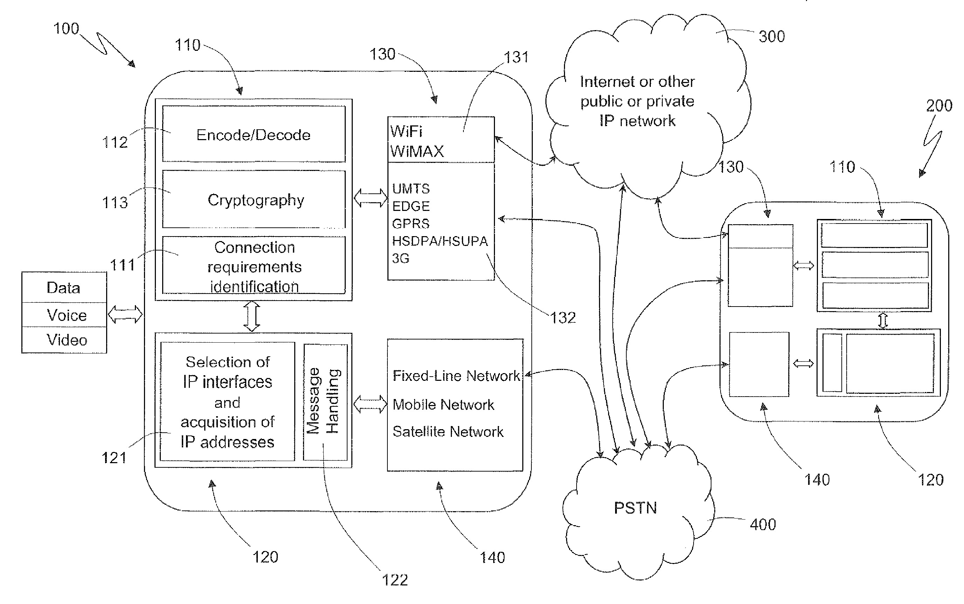

For a better understanding of the present invention, some preferred embodiments, provided by way of explanatory and non-limitative example, shall now be described with reference to the attached drawing (not to scale), which schematically shows two communication devices according to a preferred embodiment of the present invention.

The following description is provided to allow an expert in the field to embody and use the invention. Various modifications to the embodiments presented will be immediately evident to experts and the generic principles disclosed herein could be applied to other embodiments and application without however leaving the scope of protection of the present invention defined in the attached claims. Thus, the present invention must not be intended as limited to just the embodiments described and shown, but must be given the broadest scope of protection consistent with the principles and the characteristics presented herein and defined in the enclosed claims.

In general, the present invention relates to a method for establishing, upon request from a calling communication device, a data and/or voice and/or video communication on any type of IP-based network between said calling communication device and a called communication device, one or both of them possibly being mobile devices and not permanently connected to the IP-based network. In particular, the present invention allows the aforesaid point-to-point communication to be established without making use of servers present on the IP-based network that offer centralized directory services, without making use of distributed directory services provided via the IP-based network and, more in general, without any form of mediation that is directly based on the IP-based network. In fact, according to the present invention, in order to establish said point-to-point communication, the calling communication device exploits the PSTN to communicate the necessary parameters to the called communication device to set up said communication.

In detail, the calling communication device informs the called communication device via the PSTN, specifically via a messaging service supported by the PSTN, of the fact that a communication on an IP-based network is to be established with said called communication device, which, once informed, selects the IP-based network from those to which it can connect that enables said point-to-point communication to be established and which satisfies predetermined requirements. Preferably, said predetermined requirements could include connection requirements determined by the calling communication device that represent minimum connection requirements necessary for setting up the IP-based communication; for example, they might represent a minimum quality of service (QoS) that must be guaranteed by the IP-based network used for the IP-based communication. In addition, always preferably, said predetermined requirements could also include communication requirements that could include constraints and/or preferences stored on the communication devices and/or set by users of the communication devices through user interfaces (UI) of the communication devices. For example, said communication requirements could include: an obligation or a ban on the use of predetermined IP-based networks and/or a list of IP-based networks ordered according to a predetermined order of preference and/or a security policy to be used in the point-to-point IP-based communication, for example, one that imposes cryptographically protecting the point-to-point IP-based communication.

Furthermore, the point-to-point IP-based communication to be established can conveniently be a VoIP communication and/or a communication to exchange data and/or documents and/or images and/or video etc. As previously mentioned, VoIP and/or data exchange communications can conveniently be protected cryptographically against possible interception by third parties and against accidental or intentional alterations caused by third parties.

On the other hand, the calling and called communication devices can, always conveniently, be smartphones and/or laptop computers and/or desktop computers and/or laptop computers and/or desktop computers connected, for example, by cable, by radio (Bluetooth or similar), by infrared, etc., to smartphones used as an access interface to the PSTN and to one or more IP-based network(s). Furthermore, one of the two communication devices or even both of them can comprise a telecamera and/or analogue and/or digital input/output lines for remote monitoring and remote control applications over the IP-based network.

In addition, as shall be described in detail further on, the present invention can conveniently be embodied by means of both hardware and software modules and/or just hardware modules and/or just software modules directly integrable in communication devices, such as smartphones.

Going into the present invention in greater detail, the attached figure shows a block diagram representing a first communication device 100 and a second communication device 200 according to a preferred embodiment of the present invention.

In particular, the second communication device 200 shown in the attached figure, although represented in a stylized manner, is identical to the first communication device 100, i.e. it comprises the same elements as the first communication device 100 that shall be described in detail in the following. Thus, it remains implicit that everything described in the following regarding the first communication device 100 also holds for the second communication device 200.

In detail, as shown in the attached figure, the first communication device 100 comprises one or more IP interface(s) 130 for access to one or more IP-based network(s) 300. The IP interfaces 130 can include first IP interfaces 131 that enable direct access to the Internet or to another public or private IP-based network 300. Conveniently, the first IP interfaces 131 can be wireless interfaces, for example based on WiFi and/or WiMAX standards. In addition, the IP interfaces 130 can also include second IP interfaces 132 that enable indirect access to the Internet 300 through a PSTN 400. Conveniently, the second IP interfaces 132 can comprise interfaces based on GPRS and/or EDGE and/or UMTS and/or HSDPA/HSUPA and/or 3G technologies, etc. In particular, the IP interfaces 130 can include:
- only one or more first IP interface(s) 131; or
- only one or more second IP interface(s) 132; or
- one or more first IP interface(s) 131 and one or more second IP interface(s) 132.

In addition, the first communication device 100 comprises one or more PSTN interface(s) 140 for access to a Public Switched Telephone Network (PSTN) 400. In particular, the PSTN interfaces 140 can include:
- one or more access interface(s) to the fixed-line telephone network; and/or
- one or more access interface(s) to the mobile cellular phone network (GSM, UMTS, etc.); and/or
- one or more access interface(s) to the mobile satellite phone network.

As previously mentioned, the second communication device 200 also comprises at least one IP interface 130 of the above-stated type and at least one PSTN interface 140 of the above-stated type.

Furthermore, the communication devices 100 and 200 are configured to use a messaging service supported by the PSTN 400. In particular, the PSTN interfaces 140 of the communication devices 100 and 200 are configured to send/receive messages by means of the PSTN 400 using the messaging service provided by the PSTN 400. Conveniently, the messaging service provided by the PSTN 400 and used by the communication devices 100 and 200 can be the so-called Short Message Service (SMS).

More specifically, in use, the first communication device 100 represents the calling communication device that must establish an IP-based communication with the second communication device 200 that, consequently, represents the called communication device.

In particular, the first communication device 100 comprises a user interface (UI) (not shown in the attached figure) operable by a user of the first communication device 100 for establishing an IP-based communication between the first communication device 100 and the second communication device 200.

Preferably, the user selects, via the UI, a specific type of IP-based communication to be established, for example an IP-based communication for data exchange and/or voice and/or images and/or video and/or documents etc., from a plurality of IP-based communication types supported by the first communication device 100. Conveniently, via the UI, the user can also:
- set communication requirements to be satisfied by the IP-based communication to be established; and/or
- select the communication requirements from a plurality of communication requirements stored on the first communication device 100.

In addition, always conveniently, via the UI, the user can also:
- store new communication requirements on the first communication device 100; and/or
- modify/delete the communication requirements stored on the first communication device 100.

As previously described, the communication requirements could include constraints and/or preferences such as, for example, an obligation or a ban on the use of predetermined IP-based networks and/or a list of IP-based networks ordered according to a predetermined order of preference and/or a security policy that the IP-based communication must respect.

The first communication device 100 can also be configured for automatically establishing an IP-based communication with the second communication device 200 in accordance with predetermined criteria.

In any case, when an IP-based communication must be established with the second communication device 200, the first communication device 100 implements a first IP-based communication establishment step. In particular, in said first IP-based communication establishment step, a first module 110 of the first communication device 100, specifically a first component 111 of the first module 110, identifies, or determines, connection requirements for the IP-based communication to be established and communicates them to a second module 120 of the first communication device 100. As previously described, the connection requirements represent the minimum connection requirements necessary for setting up the IP-based communication (for example, QoS requirements). Conveniently, the connection requirements can be determined on the basis of the specific type of IP-based communication to be established and of the communication requirements stored on the first communication device 100 and/or set/selected by a user via the UI of the first communication device 100.

The second module 120 of the first communication device 100, specifically a first component 121 of the second module 120, upon receiving the determined connection requirements,
- checks which IP interfaces 130 of the first communication device 100 are currently available for establishing the IP-based communication;
- selects, from the currently available IP interfaces 130, those that permit the specific type of IP-based communication to be established and that satisfy the connection requirements identified by the first component 111 of the first module 110 and the communication requirements stored on the first communication device 100 and/or set/selected by the user of the first communication device 100; and
- connects the first communication device 100 to the IP-based network(s) 300 through each selected IP interface 130 in order to acquire, for each selected IP interface 130, a corresponding IP address associated with said IP interface 130.

Successively, a second component 122 of the second module 120 of the first communication device 100, in particular a message handling component 122, generates, or compiles, or prepares, a message, for example, an SMS message, which contains:
- an identifier for the specific type of IP-based communication to be established;
- the connection requirements determined by the first component 111 of the first module 110;
- the IP addresses associated with the IP interfaces 130 selected by the first component 121 of the second module 120; and
- the communication requirements stored on the first communication device 100 and/or set/selected by the user of the first communication device 100.

Once said message is generated, the first communication device 100, that is the calling communication device, sends said message to the second communication device 200, that is to the called communication device, by means of one of the available PSTN interfaces 140 and using the messaging service provided by the PSTN 400, thereby terminating the first IP-based communication establishment step.

As previously described, the second communication device 200 comprises the same modules comprising the same components and the same UI as the first communication device 100.

When the second communication device 200 receives said message from the first communication device 100, said second communication device 200 implements a second IP-based communication establishment step. In particular, the second component 122, or rather the message handling component 122, of the second module 120 of the second communication device 200 extracts the following from the received message:
- the identifier for the specific type of IP-based communication to be established;
- the connection requirements for the IP-based communication to be established;
- the IP addresses associated with the IP interfaces 130 of the first communication device 100; and
- the communication requirements.

Preferably, when the message is received, the UI of the second communication device 200 is operable by a user of the second communication device 200 to accept or to reject establishing the IP-based communication. In alternative, when the message is received, the second communication device 200 can automatically establish the IP-based communication.

Furthermore, if the user of the second communication device 200 accepts via the UI of the second communication device 200 to establish the IP-based communication or the second communication device 200 automatically accepts to establish the IP-based communication, the first component 121 of the second module 120 of the second communication device 200:
- checks which IP interfaces 130 of the second communication device 200 are currently available for establishing the IP-based communication;
- selects, from the currently available IP interfaces 130, those that permit the specific type of IP-based communication indicated in the received message to be established and that satisfy the connection requirements extracted from the received message, the communication requirements extracted from the received message and any further communication requirements stored on the second communication device 200 and/or set/selected by the user of the second communication device 200 via the UI of the second communication device 200; and
- connects the second communication device 200 to the IP-based network 300 through one of the selected IP interfaces 130 in order to acquire a respective IP address.

At the end of the second IP-based communication establishment step, the second communication device 200 establishes the IP-based communication between the respective IP address acquired and one of the IP addresses extracted from the received message.

It is wished to point out here the fact that the communication devices 100 and 200 can decide to use the same type of IP interface 130 or different but compatible types.

Once the IP-based communication is established, the two terminals 100 and 200 implement an IP-based communication step, i.e., perform the IP-based communication, for example, exchanging data and/or voice and/or images and/or video and/or documents etc.

Preferably, in the first IP-based communication establishment step, the communication device 100 makes a confirmation call, via the PSTN 400, to the second communication device 200. In this case, the second communication device 200 establishes the IP-based communication if the message is received within a time frame having a certain size, i.e., duration, and a predetermined position with respect to the time of receiving the confirmation call. Conveniently, the size, or duration, of the time frame and its position with respect to the time of receiving the confirmation call can be set by the user of the second communication device 200 via the UI of the second communication device 200.

The mechanism based on the confirmation call permits certain problems that can arise in cases where the PSTN 400 does not guarantee message delivery within contractually negotiable time limits to be resolved. In fact,
- the message could arrive at an inopportune moment for establishing the IP-based communication for one or both of the communication devices 100 and/or 200 or for one or both of the users of the communication devices 100 and/or 200;
- the connection requirements sent by the calling communication device 100 to the called communication device 200 might no longer be valid at the moment when the message is delivered to the called communication device 200, if this occurs after an interval of time too long; and
- the calling communication device 100, for whatever reason (for example, to increase battery life), might not want to keep the IP connection active for a time too long while waiting for a reply from the called communication device 200.

Lastly, the confirmation call enables the calling communication device 100 to check the accessibility of the called communication device 200.

Furthermore, each of the first modules 110 of the communication devices 100 and 200 can also conveniently comprise:
- a respective second component 112 configured to implement, in the IP-based communication step, encoding/decoding functionality such as data compression/decompression (assuming the data that is provided to the first modules 110 is already in digital form) or other forms of channel encoding, such as error detection and/or correction; and
- a respective third component 113 configured to implement, always in the IP-based communication step, cryptographic functionality, such as functions needed for session key negotiation, data encryption, digital signing of data, authentication of communicating parties, etc.

Lastly, the present invention can be embodied by means of a software application, i.e, a software program, that:
- is loadable into a memory of a communication device, such as, for example, a smartphone or laptop configured to access the PSTN and one or more IP-based network(s) and to use a messaging service provided by the PSTN;
- is executable by said communication device; and
- is configured to implement the UI, the first module 110 and the second module 120 previously described.

The advantages of the present invention can be immediately appreciated from the foregoing description.

In particular, the present invention allows the previously described problems related to the currently known procedures of point-to-point IP-based communication establishment to be resolved.

In detail, the present invention distinguishes itself from conventional solutions in that it does not require the communication devices to be constantly connected to an IP-based network and does not use any directory service, whether centralized or distributed, provided by said IP-based network for establishing a communication on the IP-based network.

Finally, it is clear that various changes can be made to the present invention, all of them falling within the scope of protection of the invention defined in the attached claims.

## Claims

1. Method for establishing an Internet-Protocol-based point-to-point communication between a first (100) and a second (200) communication device configured to connect to a public switched telephone network (PSTN) (400) and to send and receive messages using a messaging service provided by the public switched telephone network (PSTN) (400), the first (100) and the second (200) communication device also being configured to connect, respectively, to a first and a second network group (300) comprising, respectively, one or more Internet-Protocol-based network(s);
the method being **characterized by** comprising:
• a first step including sending a message from the first communication device (100) to the second communication device (200) using the messaging service provided by the public switched telephone network (PSTN) (400), said message indicating that the first communication device (100) requests to establish an Internet-Protocol-based point-to-point communication with the second communication device (200) and containing Internet-Protocol-based connection parameters related to the first communication device (100); and
• a second step including establishing, by means of the second communication device (200), an Internet-Protocol-based point-to-point communication between said communication devices (100,200) in accordance with the Internet-Protocol-based connection parameters contained in the message sent from the first communication device (100) and received by the second communication device (200).

2. The method of claim 1, wherein the first step also includes making a confirmation call from the first communication device (200) to the second communication device (200) via the Public switched telephone network (PSTN) (400); and wherein establishing, by means of the second communication device (200), an Internet-Protocol-based point-to-point communication between said communication devices (100,200) comprises establishing said Internet-Protocol-based point-to-point communication if a first time instant when the second communication device (200) receives the message sent by the first communication device (100) and a second time instant when the second communication device (200) receives the confirmation call made by first communication device (100) satisfy a predetermined condition.

3. The method of claim 2, wherein the Internet-Protocol-based point-to-point communication is established if the first time instant falls within a time frame having a predetermined duration and a predetermined position with respect to the second time instant.

4. The method according to any preceding claim, wherein the first step also includes connecting the first communication device (100) to at least one Internet-Protocol-based network of the first network group (300) so as to acquire at least one IP address;
wherein the Internet-Protocol-based connection parameters contained in the message sent from first communication device (100) comprise each IP address acquired by the first communication device (100);
wherein the second step also includes connecting the second communication device (200) to an Internet-Protocol-based network of the second network group (300) so as to acquire an IP address;
and wherein establishing, by means of the second communication device (200), an Internet-Protocol-based point-to-point communication between said communication devices (100,200) comprises establishing said Internet-Protocol-based point-to-point communication between the IP address acquired by the second communication device (200) and an IP address contained in the message received by the second communication device (200).

5. The method of claim 4, wherein the first (100) and the second (200) communication device comprise, respectively, a first and a second interface group (130) to access, respectively, the first and the second network group (300), the first and the second interface group (130) respectively comprising one or more interfaces;
wherein connecting the first communication device (100) to at least one Internet-Protocol-based network comprises connecting the first communication device (100) through at least one interface of the first interface group (130);
and wherein connecting the second communication device (100) to an Internet-Protocol-based network comprises connecting the second communication device (200) through an interface of the second interface group (130).

6. The method of claim 5, wherein the first step also includes selecting at least one interface from the first interface group (130) that enables the requested Internet-Protocol-based point-to-point communication to be established and that satisfies first predetermined requirements;
wherein connecting the first communication device (100) through at least one interface of the first interface group (130) comprises connecting the first communication device (100) through each interface selected in the first interface group (130);
wherein the message sent from first communication device (100) also comprises said first predetermined requirements;
wherein the second step also includes selecting an interface in the second interface group (130) that enables establishing the requested Internet-Protocol-based point-to-point communication and that satisfies the first predetermined requirements contained in the message received by the second communication device (200) and second predetermined requirements;
and wherein connecting the second communication device (200) through an interface of the second interface group (130) comprises connecting the second communication device (200) through the interface selected in the second interface group (130).

7. A communication device (100,200) configured to:
• connect to a public switched telephone network (PSTN) (400);
• send and receive messages using a messaging service provided by the public switched telephone network (PSTN) (400); and
• connect to a network group (300) comprising one or more Internet-Protocol-based network(s);
said communication device (100,200) comprising one or more interface(s) to access the network group (300) and being further configured to implement the method claimed in any preceding claim.

8. The communication device of claim 7, comprising a user interface operable to cause the communication device to implement the first step of said method to request another communication device to establish an Internet-Protocol-based point-to-point communication.

9. The communication device of claim 8 when configured to implement the method claimed in claim 3, wherein the user interface is also operable to set the predetermined duration and the predetermined position of the time frame.

10. The communication device of claim 8 when configured to implement the method claimed in claim 6, wherein the user interface is also operable to set the first and the second requirements.

11. The communication device according to any claim 8-10, wherein the user interface is also operable, when the communication device receives a message sent from another communication device that requests to establish an Internet-Protocol-based point-to-point communication, to accept or reject establishing said Internet-Protocol-based point-to-point communication.

12. The communication device according to any claim 7-10, further configured, when the communication device receives a message sent from another specific communication device that requests to establish an Internet-Protocol-based point-to-point communication, to automatically accept establishing said Internet-Protocol-based point-to-point communication by automatically implementing the second step of said method.

13. The communication device according to any claim 7-12, further configured to automatically implementing the first step of said method for requesting another specific communication device to establish an Internet-Protocol-based point-to-point communication.

14. The communication device according to any claim 7-13, further configured, when an Internet-Protocol-based point-to-point communication is established with another communication device, to cryptographically protect the Internet-Protocol-based point-to-point communication.

15. A software program product comprising software code portions loadable in a memory of a communication device (100,200) configured to:
• connect to a public switched telephone network (PSTN) (400);
• send and receive messages using a messaging service provided by the public switched telephone network (PSTN) (400); and
• connect to a network group (300) comprising one or more Internet-Protocol-based network(s);
the communication device (100,200) comprising one or more interface(s) to access the network group (300),
said software code portions being such that to cause, when executed by the communication device (100,200), said communication device (100,200) to become configured to implement the method claimed in any claim 1-6.

16. The software program product of claim 15, comprising further software code portions such that to implement, when executed, the user interface of the communication device claimed in any claim 8-11.

17. The software program product according to claim 15 or 16, comprising further software code portions such that to cause, when executed, the communication device (100,200) to become configured like the one claimed in any claim 12-14.
